# EUROPÄISCHE PATENTSCHRIFT

(11) **EP 2 257 012 B1**
(45) Veröffentlichungstag und Bekanntmachung des Hinweises auf die Patenterteilung: **06.02.2013**
(21) Anmeldenummer: 09161505.4
(22) Anmeldetag: 29.05.2009
(51) Int. Cl.: H04L 27/26, H04B 10/66

(54) **Mehrträgermodulation optischer Kanäle mit reduzierter optischer Leistung**
Multi-carrier modulation of optical channels with reduced optical power
Modulation multi-porteuses de canaux optiques avec puissance optique réduite

(43) Veröffentlichungstag der Anmeldung: 01.12.2010
(73) Patentinhaber: Georg-Simon-Ohm Hochschule für angewandte Wissenschaften Fachhochschule Nürnberg, 90489 Nürnberg (DE)
(72) Erfinder: Ziemann, Olaf, 90408, Nürnberg (DE); Poisel, Hans, 91227, Leinburg (DE)
(74) Vertreter: Lohr, Georg

(56) Entgegenhaltungen:
- EP-A- 2 017 981
- US-A1- 2006 140 296
- AMSTRONG J: "OFDM for Opticl Communications" JOURNAL OF LIGHTWAVE TECHNOLOGY, Bd. 27, Nr. 3, 1. Februar 2009 (2009-02-01), Seiten 189-204, XP002554187

## Beschreibung

### Technisches Gebiet

Die Erfindung betrifft eine Vorrichtung und ein Verfahren zur Reduzierung der mittleren Leistung in optischen Übertragungssystemen mit Mehrträgermodulation.

### Stand der Technik

Zur optimalen Ausnutzung von Kanälen mit begrenzter Bandbreite werden in der modernen Kommunikationstechnik häufig Vielträger- oder auch Mehrträger-Datenübertragungssysteme (Multicarrier Modulation, MCM) eingesetzt. Beispiele hierfür sind DMT: Discrete Multitone Transmission oder auch OFDM: Orthogonal Frequency Division Multiplexing. Hierbei werden die Datensignale einer Vielzahl diskreter Träger übertragen. Das im Zeitbereich entstehende Summensignal dieser Träger gleicht einem Rauschsignal. Es weist eine weitgehend Gaußförmige Pegelverteilung auf. Bei solchen rauschähnlichen Signalen können kurzzeitig sehr hohe Signalpegeln auftreten. Besteht ein Mehrträgersignal beispielsweise aus N Trägern mit einer identischen Amplitude von U, so kann im ungünstigsten Fall das entstehende Summensignal die Amplitude N x U erreichen. Bei bipolaren Kanälen wird das Signal um den Mittelwert Null moduliert. Die Standardabweichung σ des Signalpegels ist wesentlich kleiner als der maximale Signalpegel. Bei bipolaren Kanälen (zum Beispiel optische Übertragung mit Amplitudendetektion) wird das Signal um einen positiven Mittelwert (meist die Hälfte des maximalen Pegels) herum moduliert. Die Varianz des Signals relativ zu diesem Mittelwert ist ebenfalls sehr viel kleiner als der Mittelwert selbst. Um das Signal verzerrungsfrei zu übertragen, müssen alle Komponenten im Signalpfad angefangen von den A/D-Wandlern über optische Sender und optische Empfänger bis hin zu den A/D-Wandlern für den größtmöglichen Signalpegel ausgelegt werden. Um hier die notwendigen Leistungsreserven und damit auch die Systemkosten möglichst gering zu halten, versucht man, das Verhältnis zwischen dem maximalen Pegel und der Standardabweichung des Pegels möglichst gering zu halten. Hierzu werden die selten auftretenden, hohen positiven und negativen Signalspitzen begrenzt. Diese Begrenzung ist auch unter dem Begriff clipping bekannt.

Mehrträgerkommunikationsverfahren werden vorwiegend zur Leitungskommunikation wie in DSL-Systemen oder auch in Funksystemen eingesetzt. Sie sind auch interessant für optische Fasern wie POF (Plastic Optical Fibers), die nur eine begrenzte Bandbreite, aber guten Signal/Rauschabstand aufweisen.

In der EP 1469 649 B1 ist ein Verfahren zur Verringerung des Verhältnisses von Spitzenleistung zu Durchschnittsleistung eines modulierten Basisbandsignals offenbart. Darin werden einzelne Signalspitzen erfasst und ein passendes Spitzenauslöschsignal erzeugt, welches mit dem modulierten Basisbandsignal überlagert wird, um einzelne Spitzen auszulöschen.

Durch das hier offenbarte Verfahren wird das Signal auf eine Weise verändert, die gegenüber einem einfachen Clipping, bei dem die Signalspitzen abgeschnitten werden, geringer beeinflusst wird, so dass weniger oder im Idealfall keine Bitfehler entstehen.

In der US 6,954,505 B2 ist ein DMT Transceiver offenbart, bei dem nicht zur Datenübertragung benutzte Kanäle zur Übertragung eines "clip prevention signals" eingesetzt werden. Durch die Summe der Signale der Nutzkanäle sowie der mit dem "clip prevention signal" beaufschlagten Kanäle entsteht wiederum ein Signal mit niedrigeren Spitzenpegeln. Nachteilig an diesem Verfahren ist der komplexe iterative Prozess zur Erzeugung der "clip prevention signals". Weiterhin stehen die für dieses "clip prevention signal" benötigten Kanäle nicht mehr zur Datenübertragung zur Verfügung. Dies führt zu einer nicht vernachlässigbaren Kapazitätsverringerung.

Der hier zitierte Stand der Technik bezieht sich auf OFDM bzw. DMT-Verfahren zur leitungsgebundenen Übertragung. Bei optischen Kommunikationssystemen können diese zwar grundsätzlich auch eingesetzt werden, jedoch müssen diese Verfahren an die Eigenheiten optischer Systeme angepasst werden.

In der EP 2 017 981 A ist ein Verfahren zur Verbesserung des Signalrauschabstandes in optischen OFTM Systemen offenbart. Hierbei werden die Signale über eine nicht lineare Übertragungsfunktion abgebildet.

### Darstellung der Erfindung

Der Erfindung liegt die Aufgabe zugrunde, eine Vorrichtung und ein Verfahren auszugestalten, mit dem Mehrträger-modulierte Signale zur Übertragung über optische Strecken erzeugt werden können, die mit höherer Signalqualität beziehungsweise geringerer Bitfehlerrate gegenüber dem Stand der Technik übertragen werden können. Die Vorrichtung beziehungsweise das Verfahren sollte einfach gestaltet sein und nur eine einfache Hardware bzw. wenig Rechenleistung in einem digitalen Signalprozessor benötigen.

Diese Aufgabe wird durch eine Vorrichtung nach Anspruch 1 gelöst. Vorteilhafte Ausgestaltungen der Erfindung sind in den Unteransprüchen angegeben.

Werden Mehrträgerkommunikationsverfahren zur Leitungskommunikation eingesetzt, so ist meist ein maximaler Signalpegel vorgegeben, den die aktiven Komponenten in der Übertragungsstrecke noch verarbeiten können, beziehungsweise welcher aus Störsicherheitsgründen noch akzeptabel ist. Der Erfindung liegt die Erkenntnis zugrunde, dass bei optischen Systemen relativ hohe Signalpegel verarbeitet werden können. So können beispielsweise optische Sender mit LED kurzzeitig sehr hohe Signalpegel abgeben. Ein Übersprechen zwischen benachbarten optischen Signalstrecken ist auch bei hohen Signalpegeln nicht zu befürchten. Kritisch ist bei optischen Übertragungsstrecken häufig der mittlere Signalpegel, der durch thermische Grenzen von Bauelementen oder durch Augensicherheitsgrenzen festgelegt wird. Erfindungsgemäß wird nun der mittlere Signalpegel reduziert. Hierbei wird vorzugsweise die Standardabweichung konstant gehalten. Optional kann der mittlere Signalpegel des reduzierten Signals durch Verstärkung wieder auf dem vorhergehenden Wert angehoben werden, wodurch sich der Signal-Rauschabstand verbessert.

Bei einem erfindungsgemäßen Verfahren wird für jedes Datensymbol eine Korrekturfunktion *f* ermittelt. Hierzu wird das abgetastete oder in einem digitalen Signalprozessor bereits digital vorliegende Datensymbol zunächst in M Sektoren unterteilt. Dabei gilt M ≥ 1. Die Sektoren müssen nicht alle dieselbe Größe, das heißt dieselbe Anzahl von Abtastwerten aufweisen. Es ist jedoch besonders günstig, alle Sektoren gleich groß zu wählen. Im nächsten Schritt wird für jeden Sektor der minimale Signalpegel bestimmt. Daraus wir eine Korrekturfunktion *f* bestimmt. In einem besonders bevorzugten Fall stellt die Korrekturfunktion den Minimalwert in jedem Sektor dar. Schließlich wird von dem Signal eines jeden Sektors die Korrekturfunktion (also im bevorzugten Fall der ermittelte Minimalpegel) subtrahiert, so dass der Minimalpegel auf einem Nullwert liegt. Hierbei kann selbstverständlich noch ein Offset vorhanden sein, so dass dieser Nullwert tatsächlich nicht einem Spannungswert Null oder einem Zahlenwert Null entspricht. Durch diese Operation wird nun die zu übertragende Energie im gesamten Symbol um das Integral über die Korrekturfunktion reduziert. Das modifizierte Signal kann nun aufgrund des reduzierten mittleren Pegels einfacher über eine optische Übertragungsstrecke, die einen unipolaren Kanal darstellt, übertragen werden. Im Empfänger wird zur Wiederherstellung des originalen Signals der jeweilige Minimalpegel zu den entsprechenden Abtastwerten des Datensymbols hinzuaddiert. Damit kann eine verlustfreie und fehlerfreie Übertragung des Signals mit reduziertem mittlerem Signalpegel erreicht werden. Wesentlich im Sinne der Erfindung ist, dass die Korrekturfunktion *f(s)* im Sender auf das Signal s angewendet wird und im Empfänger eine inverse Korrekturfunktion *fᵢ* auf das empfangene Signal angewendet wird, wobei gilt *fᵢ* (*f(s)*) = *s*. So wird in einem weiteren vorteilhaften Fall im Sender das Signal mit der Korrekturfunktion multipliziert und im Empfänger durch die Korrekturfunktion dividiert.

Das erfindungsgemäße Verfahren ist insbesondere für optische Übertragungssysteme geeignet, da dort im Gegensatz zu elektrischen (leitungsgebundenen) Systemen keine negativen Signale übertragen werden können.

Besonders günstig ist es, wenn die Korrekturfunktion *f* innerhalb eines jeden Sektors einen konstanten Wert aufweist. Das heißt, innerhalb eines jeden Sektors wird ein konstanter Offset-Wert von den Abtastwerten des Datensymbols subtrahiert und im Empfänger wieder hinzuaddiert.

In einer weiteren vorteilhaften Ausgestaltung der Erfindung folgt die Korrekturfunktion *f* innerhalb eines Sektors einer mathematischen Funktion. Eine solche mathematische Funktion kann beispielsweise eine Dreiecksfunktion oder eine Gauß-Funktion sein.

In einer weiteren vorteilhaften Ausgestaltung der Erfindung umfasst die Korrekturfunktion *f* auch noch eine Skalierung des Signals. Besonders günstig ist es, wenn es derart skaliert wird, dass der mittlere Pegel dem ursprünglichen mittleren Pegel entspricht. Eine weitere Möglichkeit der Skalierung wäre, dass der maximale Pegel einem vorgegebenen maximalen Pegel entspricht. Damit kann das Signal mit einer insgesamt höheren Standardabweichung und somit einem besseren Signal/Rausch-Abstand übertragen werden.

Um im Empfänger die senderseitige Korrektur des Datensymbols wieder rückgängig zu machen, ist es notwendig, dass zwischen Sender und Empfänger eine Kommunikation über die Korrekturfunktion oder zumindest über die ermittelten Spitzenwerte erfolgt. Entsprechend einer besonders vorteilhaften Ausgestaltung der Erfindung wird ein separater Datenkanal zur Übertragung der Korrekturfunktion *f* verwendet.

In einer weiteren vorteilhaften Ausgestaltung der Erfindung wird die Korrekturfunktion *f* in einen eigenen Frequenzbereich übertragen.

Vorteilhaft ist es auch, wenn die Korrekturfunktion *f* über ein überlagertes Codemultiplex-Signal übertragen wird.

Alternativ kann auch die Korrekturfunktion *f* innerhalb des Datenstroms übertragen werden.

In einer weiteren Alternative kann die Korrekturfunktion *f* auch in einem eigenen Zeit-Multiplexsignal übertragen werden.

Alternativ kann die Korrekturfunktion *f* auch in einem vollständig unabhängigen Kanal, beispielsweise mit einer anderen optischen Wellenlänge oder in einem anderen optischen Signalpfad übertragen werden.

Ein erfindungsgemäßes Verfahren kann auch mit anderen Verfahren zur Begrenzung von Spitzenwerten (clipping) kombiniert werden, um eine weitere Reduzierung des Verhältnisses von Standardabweichung zum mittleren Pegel zu erreichen. Insbesondere kann nach einer Korrektur mit der Korrekturfunktion ein Clipping der positiven Spitzen erfolgen.

Ein weiterer Gegenstand der Erfindung ist eine Vorrichtung zur Durchführung des erfindungsgemäßen Verfahrens. Eine solche Vorrichtung weist einen Spitzenwertdetektor 4 zur Erfassung der minimalen Pegel auf. Das ermittelte Spitzenwertsignal wird an einem Korrekturfunktionsgenerator 5 übertragen, welcher eine Korrekturfunktion *f* 6 erzeugt, welche mittels eines Addierers 7 zu dem Eingangssignal mit den Datensymbolen 2 addiert wird, um das Ausgangssignal 3 zu erhalten.

Ein weiterer Gegenstand der Erfindung ist ein Signalprozessor mit einer Software zur Durchführung des erfindungsgemäßen Verfahrens.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine erfindungsgemäße Vorrichtung zur Reduktion des mittleren Signalpegels eines Mehrträgersignals.
- Figur 2: zeigt ein typisches Mehrträgersignal
- Figur 3: zeigt ein Mehrträgersignal zusammen mit einer Korrekturfunktion.
- Figur 4: zeigt ein Mehrträgersignal zusammen mit einer weiteren Korrekturfunk- tion.
- Figur 5: zeigt ein durch die Korrekturfunktion korrigiertes Signal.
- Figur 6: zeigt das Histogramm eines herkömmlichen Mehrträgersignals.
- Figur 7: zeigt das nach einem erfindungsgemäßen Verfahren bearbeitete Mehr- trägersignal.
- Figur 8: zeigt das Mehrträgersignal aus Figur 3, wobei wichtige Maße und Begriffe eingezeichnet sind.
- Figur 9: zeigt das Ablaufdiagramm eines Erfindungsgemäßen Senders

- Figur 10: zeigt das Ablaufdiagramm eines Erfindungsgemäßen Empfängers

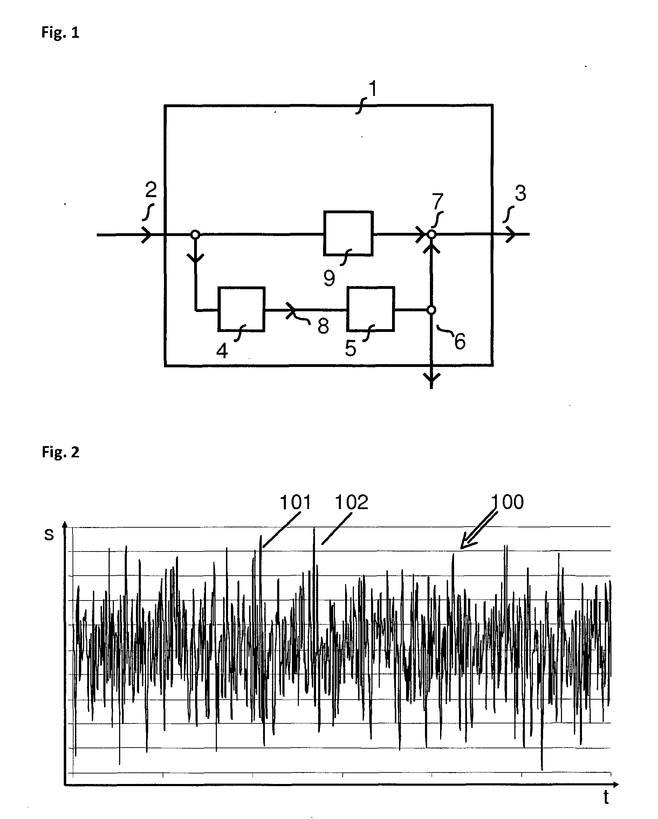

In Figur 1 ist eine erfindungsgemäße Vorrichtung dargestellt. Eine erfindungsgemäße Vorrichtung 1 zur Reduktion der mittleren Signalpegel in einem Mehrträgersignal 2 umfasst einen Spitzenwertdetektor 4, der die Minimalpegel des Signals innerhalb eines vorgegebenen Zeitintervalls, hier Sektor genannt, bestimmt. Dieses Spitzenwertsignal 8 wird an einen Korrekturfunktionsgenerator 5 weitergeleitet. Dieser erzeugt ein Signal 6 entsprechend der Korrekturfunktion, welches mittels eines Addierers 7 zu dem durch ein Verzögerungsglied 9 zeitverzögerten Eingangssignal addiert wird, um ein Ausgangssignal 3 zu erhalten. Mit dem Verzögerungsglied 9 wird das Eingangssignal um die Zeitdauer wenigstens eines Sektors verzögert, so dass der Spitzenwertdetektor 4 über die Dauer eines Sektors den minimalen Signalwert bestimmten kann. Für den Fall, dass der Korrekturfunktionsgenerator 5 eine zusätzliche Zeit zur Ermittlung der optimalen Korrekturfunktion benötigt, muss die entsprechende Verzögerung des Verzögerungsgliedes 9 angepasst werden. Das Signal 6 der Korrekturfunktion wird ausgegeben und an den Empfänger übermittelt.

In Figur 2 ist ein typisches Mehrträgersignal 100 dargestellt. Es ist in diesem Diagramm nach rechts die Zeitachse t und nach oben der Signalpegel s aufgetragen. Es sind in diesen Signalen verschieden stark ausgeprägte positive Spitzen, beispielsweise 101, 102, sowie auch negative Spitzen vorhanden. Die gesamte Übertragungsstrecke muss in der Lage sein, ein solches Signal einschließlich der auch relativ selten auftretenden Spitzen verzerrungsfrei zu übertragen.

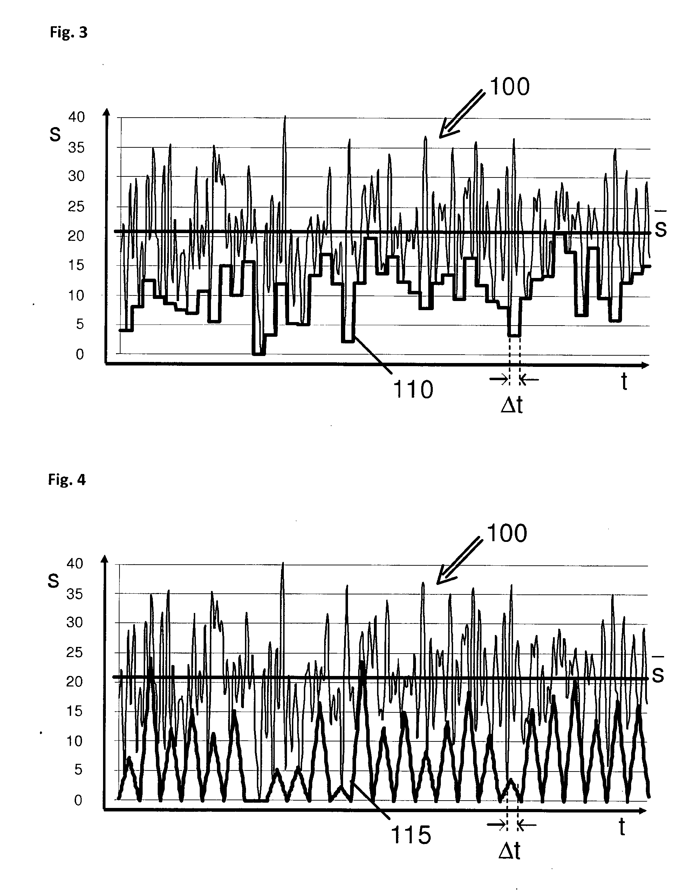

In Figur 3 ist ein Mehrträgersignal 100 mit einer entsprechenden Korrekturfunktion 110 dargestellt. Diese Korrekturfunktion repräsentiert hier über ein vorgegebenes Zeitintervall Δt, das der Dauer eines Sektors einspricht, den minimalen Wert des Signals. Das hier dargestellte Signal könnte zum Beispiel aus 1.000 Trägern, moduliert mit 10 Bit/Symbol (QAM 1024) bestehen. Die Brutto-Bitrate ist 10.000 Bit pro Symbollänge. Das Symbol wird hier beispielsweise in 50 Sektoren unterteilt und die Korrekturfunktion wird mit 4 Bit Amplitudenauflösung übertragen. Somit ergeben sich 16 mögliche Pegel für die Korrekturfunktion. Der zusätzliche Kapazitätsbedarf zur Übertragung der Korrekturfunktion entspricht dann 200 Bit/Symbol, was wiederum 2 % der Nutz-Bitrate entspricht. Die Korrekturfunktion kann grundsätzlich mit einer Amplitudenauflösung bis zur Auflösung des zu Signalübertragung verwendeten D/A Wandlers, oder aber auch mit einer beliebigen kleineren Auflösung generiert werden. Der mittlere Signalpegel s liegt hier bei 20,13.

In Figur 4 ist ein Mehrträgersignal 100 mit einer dreieckförmigen Korrekturfunktion 115 dargestellt.

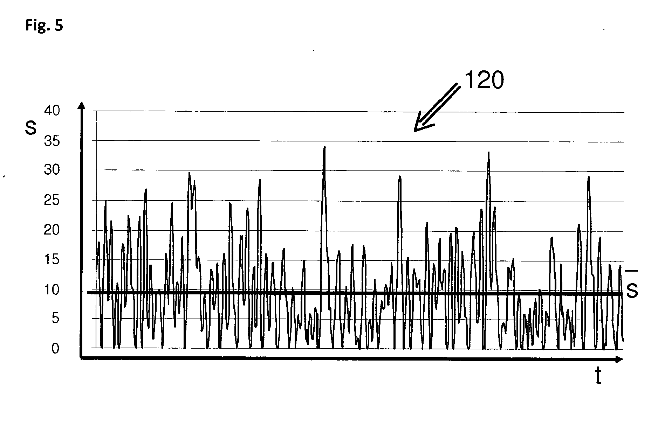

In Figur 5 ist nun ein korrigiertes Signal 120 dargestellt. Dieses Signal ergibt sich durch Subtraktion der Korrekturfunktion 110 von dem Signal 100 aus der Figur 3. Durch die Korrektur sinkt der mittlere Signalpegel *s̅* auf 9,42.

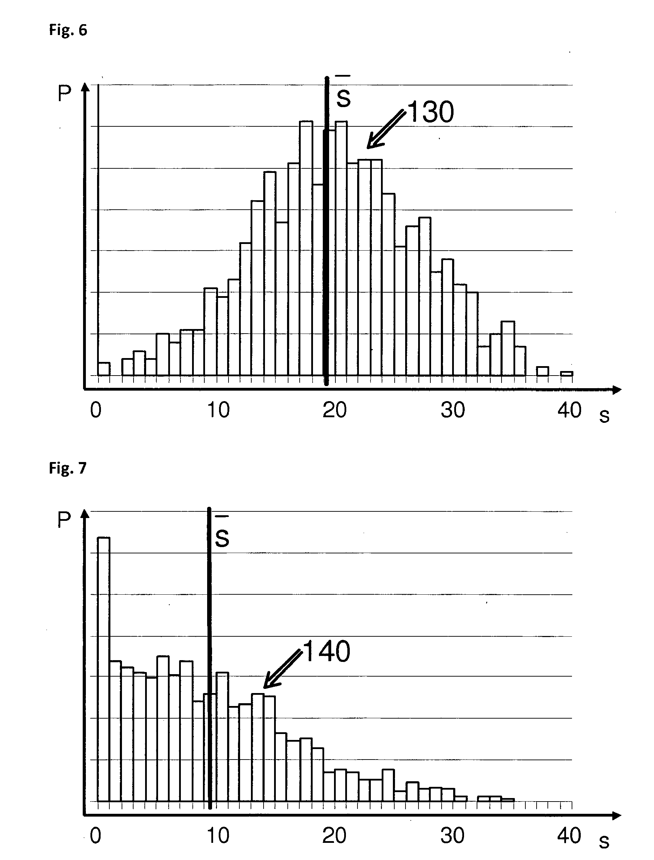

In Figur 6 ist ein herkömmliches Mehrträgersignal nach Fig. 3 als Histogramm 130 dargestellt. Auf der horizontalen Achse ist der Pegel des Signals s aufgetragen, während auf der vertikalen Achse die relative Häufigkeit P aufgetragen ist. Am häufigsten treten hier Signale mit einem relativen Pegel von 20 auf, wobei Signale mit relativen Pegeln kleiner 5 und größer 25 nur noch mit einer relativen Häufigkeit von kleiner 10 auftreten. Der mittlere Signalpegel s liegt bei 20,13.

In Figur 7 ist das Pegelhistogramm 140 eines Mehrträgersignals nach Fig. 5, welches mit einer Korrekturfunktion entsprechend der Erfindung korrigiert wurde, dargestellt. Es ist hier zu erkennen, dass die höchste Häufigkeit bei Signalen kleiner Pegel besteht und die Häufigkeit zu hohen Pegeln schnell abnimmt. Der mittlere Signalpegel s ist mit 9,42 geringer als der mittlere Signalpegel aus Figur 6. Während bei dem herkömmlichen Mehrträgersignal nach Figur 6 mit einer relativen Häufigkeit kleiner 10 noch Signalpegel bis zu einem Wert von 35 auftreten, treten in dem korrigierten Signal mit derselben relativen Häufigkeit nur noch Signalpegel mit einem Wert von 25 auf. Dies führt zu einer wesentlichen Reduzierung der mittleren Signalpegel und auch eventuell zu einer Reduzierung der maximalen Signalpegel. Somit kann eine Übertragungsstrecke auf wesentlich kleinere Signalpegel ausgelegt werden als nach dem Stand der Technik.

Die beiden Signale aus den Figuren 3 (inkorrigiert) und 5 (korrigiert) mit den zugehörigen Pegelhistogrammen (Fig. 6 und 7) weisen dieselbe Standardabweichung auf. Das korrigierte Signal (Fig. 5, Histogramm in Fig. 7) hat aber einen wesentlich kleineren mittleren Signalpegel s (hier ca. 3 dB niedriger). Wird der optische Kanal (zwischen optischem Sender und optischen Empfänger) durch eine maximal zulässige mittlere Leistung begrenzt, so kann das korrigierte Signal entsprechend verstärkt werden (hier um 3 dB). Bei identischer optischer Sendeleistung steht also am Empfänger ein entsprechend größeres Signal zur Verfügung. Im dargestellten Fall könnte statt QAM1024 mit QAM4096 übertragen werden. Dem Informationsgewinn von 2000 Bit/Symbol steht ein Aufwand von nur 200 Bit/Symbol zur Übertragung der Korrekturfunktion *f* gegenüber.

Im Gegensatz zu einem Clipping nach dem Stand der Technik werden keine zusätzlichen Bitfehler erzeugt, da zur Auswertung im Sender durch die Addition der Korrekturfunktion das unverfälschte Originalsignal zur Verfügung steht. Gegebenenfalls kann die Korrekturfunktion auch mit einer geschätzten Übertragungsfunktion des Kanals beaufschlagt werden.

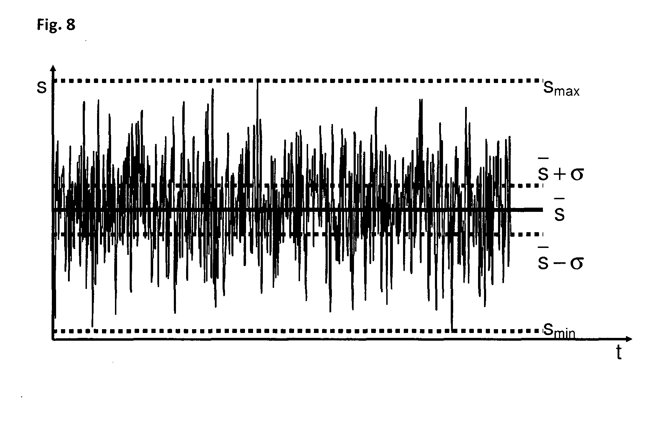

Figur 8 zeigt das Mehrträgersignal aus Figur 2, wobei wichtige Maße und Begriffe eingezeichnet sind. Der mittlere Signalpegel s (entspricht bei optischen Systemen der Sendeleistung) liegt zwischen dem minimalen Signalpegel sₘᵢₙ und dem maximalen Signalpegel sₘₐₓ. Die Standardabweichung σ entspricht weitgehend der auswertbaren Signalleistung.

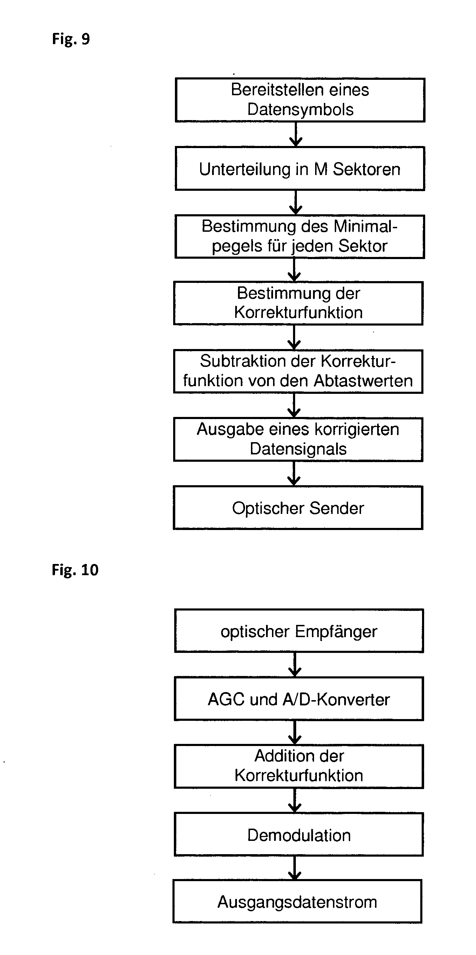

In Figur 9 ist das Ablaufdiagramm eines erfindungsgemäßen Senders offenbart. In einem ersten Schritt wird das Datensymbol bereitgestellt. Das Datensymbol wird dann in M Sektoren, die vorzugsweise die gleiche Größe haben unterteilt. Schließlich wird für jeden Sektor der Minimalpegel des Signals bestimmt. Daraus wird im nächsten Schritt die Korrekturfunktion ermittelt. Daraufhin wird die Korrekturfunktion von den Abtastwerten subtrahiert. Schließlich wird noch das so bearbeitete Signal vorzugsweise an einen optischen Sender ausgegeben. Weiterhin wird die Korrekturfunktion an den Empfänger übertragen. Dies erfolgt bevorzugt durch Einfügen der Korrekturfunktion in die Daten des nächsten Datensymbols.

In Figur 10 ist das Ablaufdiagramm eines erfindungsgemäßen Empfängers offenbart. Das Ausgangssignal des optischen Empfängers wird über eine Verstärkungsregelung (AGC) und einen Analog/Digital-Konverter in digitale Werte umgewandelt. Zu diesen Werten wird nun ein Korrektursignal entsprechend der Korrekturfunktion hinzu addiert. Danach erfolgt die Demodulation, beispielsweise eines QAM Signals. Aus den demodulierten Daten wird dann auch das Korrektursignal für das nächste oder eines der nächsten Symbole extrahiert. Dieses Korrektursignal wird in einem Pufferspeicher solange zwischengespeichert, bis es zur Korrektur der digitalen Werte des Symbols benötigt wird. Die korrigierten Werte stellen den Ausgangsdatenstrom dar.

### Bezugszeichenliste

- 1: Vorrichtung 1 zur Reduktion des mittleren Signalpegels
- 2: Mehrträgersignal
- 3: Ausgangssignal
- 4: Spitzenwertdetektor
- 5: Korrekturfunktionsgenerator
- 6: Signal entsprechend der Korrekturfunktion
- 7: Addierer
- 8: Spitzenwertsignal
- 9: Verzögerungsglied
- 100: Mehrträgersignal
- 101: Signalspitze
- 102: Signalspitze
- 110: Rechteckförmige Korrekturfunktion
- 115: Dreieckförmige Korrekturfunktion
- 120: Korrigiertes Signal
- 130: Histogramm eines herkömmlichen Mehrträgersignals
- 140: Histogramm eines korrigierten Mehrträgersignals
- t: Zeitachse
- s: Signalpegel
- Δt: Zeitdauer eines Sektors
- P: relative Häufigkeit
- σ: Standardabweichung des Signalpegels
- s: Mittlerer Signalpegel

## Patentansprüche

1. Verfahren zur Erzeugung mehrträgermodulierter Signale für optische Kanäle mit reduziertem mittleren Signalpegel umfassend die Schritte:
- Abtasten des Datensymbols eines Mehrträgermodulierten Signals;
- Unterteilung des Datensymbols in M Sektoren;
- Bestimmung einer Korrekturfunktion durch Berechnung des Minimalpegels für jeden Sektor;
- Erzeugung eines korrigierten Signals durch Subtraktion und/oder Multiplikation der Korrekturfunktion von den Abtastwerten des zugehörigen Sektors.

2. Verfahren zur Erzeugung mehrträgermodulierter Signale nach Anspruch 1, die Korrekturfunktion innerhalb eines Sektors konstant ist.

3. Verfahren zur Erzeugung mehrträgermodulierter Signale nach Anspruch 1,
die Korrekturfunktion innerhalb eines Sektors einer mathematischen Funktion folgt.

4. Verfahren zur Erzeugung mehrträgermodulierter Signale nach einem der Ansprüche 1 bis 3,
das durch Subtraktion der Korrekturfunktion von den Abtastwerten korrigierte Signal verstärkt wird, so dass der maximale Signalpegel einem vorgegebenen maximalen Pegel entspricht.

5. Übertragungsverfahren mittels mehrträgermodulierter Signale für optische Kanäle mit reduziertem mittleren Signalpegel umfassend die Schritte:
- Erzeugung Mehrträgermodulierter Signale für optische Kanäle mit reduziertem mittleren Signalpegel nach einem der vorhergehenden Ansprüche;
- Aussendung des korrigierten Signals durch einen optischen Sender in einen Lichtwellenleiter;
- Empfang des optischen Signals aus dem Lichtwellenleiter durch einen optischen Empfänger;
- Rekonstruktion des ursprünglichen Datensymbols durch Addition und/oder Division der Korrekturfunktion zu einem Ausgangssignal des optischen Empfängers.

6. Übertragungsverfahren nach Anspruch 5,
bei dem
die Korrekturfunktion über einen separaten Kanal übertragen wird.

7. Übertragungsverfahren nach Anspruch 5,
bei dem
die Korrekturfunktion in einem eigenen Frequenzbereich übertragen wird.

8. Übertragungsverfahren nach Anspruch 5,
bei dem
die Korrekturfunktion über ein überlagertes Codemultiplexsignal übertragen wird.

9. Übertragungsverfahren nach Anspruch 5,
bei dem
die Korrekturfunktion innerhalb des Datenstromes des Mehrträgermodulierten Signals übertragen wird.

10. Übertragungsverfahren nach Anspruch 5,
bei dem
die Korrekturfunktion in einem eigenen Zeitmultiplexsignal übertragen wird.

11. Vorrichtung (1) zur Erzeugung mehrträgermodulierter Signale für optische Kanäle mit reduziertem mittleren Signalpegel umfassend die folgenden Komponenten zur Erzeugung Mehrträgermodulierter Signale für optische Kanäle mit reduziertem mittleren Signalpegel nach einem der Ansprüche 1 bis 4:
- Einen Spitzenwertdetektor (4) zur Ermittlung der minimalen Pegel eines abgetasteten Datensymbols (2);
- Einen Korrekturfunktionsgenerator (5) zur Erzeugung einer Korrekturfunktion aus den vom Spitzenwertdetektor ermittelten Werten (8);
- Ein Verzögerungselement (9) zur Erzeugung eines verzögerten Datensymbols;
- Einen Summierer (7) zur Erzeugung eines korrigierten Signals durch Subtraktion der Korrekturfunktion von dem verzögerten Datensymbol;

12. Vorrichtung zur Auswertung mehrträgermodulierter Signale nach einem der Ansprüche 1 bis 4 umfassend:
- Einen Summierer zur Addition der Korrekturfunktion zu dem korrigierten Signal.

13. Optisches Übertragungssystem umfassend eine Vorrichtung (1) zur Erzeugung mehrträgermodullerter Signale für optische Kanäle mit reduziertem mittleren Signalpegel nach Anspruch 11 zur Einspeisung in einen optischen Sender und eine Vorrichtung zur Auswertung Mehrträgermodulierter Signale für optische Kanäle mit reduzierter Spitzenleistung nach Anspruch 12 aus einem optischen Empfänger.

## Claims

1. Method for generating multicarrier-modulated signals for optical channels with a reduced mean signal level, comprising the steps of:
- scanning the data symbol of a multicarrier-modulated signal;
- dividing the data symbol into M sectors;
- determining a correction function by calculating the minimum level for each sector;
- generating a corrected signal by subtraction and/or multiplication of the correction function from the scanning values of the associated sector.

2. Method for generating multicarrier-modulated signals according to claim 1,
in which
the correction function is constant within a sector.

3. Method for generating multicarrier-modulated signals according to claim 1,
in which
the correction function within one sector obeys a mathematical function.

4. Method for generating multicarrier-modulated signals according to any one of claims 1 to 3,
in which
the signal corrected by subtraction of the correction function from the scanning values is amplified, so that the maximum signal level corresponds to a given maximum level.

5. Transmission method by means of multicarrier-modulated signals for optical channels with reduced mean signal levels, comprising the steps of:
- generating multicarrier-modulated signals for optical channels with reduced mean signal levels according to any one of the preceding claims;
- emitting the corrected signal with an optical transmitter into a light-waveguide;
- receiving the optical signal from the light-waveguide with an optical receiver;
- reconstructing the original data symbols by addition and/or division of the correction function to an output signal of the optical receiver.

6. Transmission method according to claim 5,
in which
the correction function is transmitted via a separate channel.

7. Transmission method according to claim 5,
in which
the correction function is transmitted in an own frequency range.

8. Transmission method according to claim 5,
in which
the correction function is transmitted via a superimposed code multiplex signal.

9. Transmission method according to claim 5,
in which
the correction function is transmitted within the data stream of the multicarrier-modulated signal.

10. Transmission method according to claim 5,
in which
the correction function is transmitted in an own time-multiplex-signal.

11. Device (1) for generating multicarrier-modulated signals for optical channels with reduced mean signal level, comprising the following components for generating multicarrier-modulated signals for optical channels with reduced mean signal level according to any one of claims 1 to 4:
- a peak value detector (4) for determining the minimum level of a scanned data symbol (2);
- a correction function generator (5) for generating a correction function from the values (8) determined by the peak value detector;
- a delay element (9) for generating a delayed data symbol;
- a summing unit (7) for generating a corrected signal by subtraction of the correction function from the delayed data symbol.

12. Device for evaluating multicarrier-modulated signals according to any one of claims to 4, comprising:
- a summing unit for adding the correction function to the corrected signal.

13. Optical transmission system, comprising a device (1) for generating multicarrier-modulated signals for optical channels with reduced mean signal level according to claim 11 for feeding-into an optical transmitter, and a device for evaluating multicarrier-modulated signals for optical channels with reduced peak power according to claim 12 from an optical transmitter.

## Revendications

1. Procédé de génération de signaux modulés à porteuses multiples pour des canaux optiques à niveau de signal moyen réduit, comprenant les étapes suivantes :
- acquisition du symbole de données d'un signal modulé à porteuses multiples ;
- division du symbole de données en M secteurs ;
- détermination d'une fonction de correction par calcul du niveau minimal pour chaque secteur ;
- génération d'un signal corrigé par soustraction et/ou multiplication par la fonction de correction des valeurs d'acquisition du secteur correspondant.

2. Procédé de génération de signaux modulés à porteuses multiples selon la revendication 1, dans lequel la fonction de correction est constante à l'intérieur d'un secteur.

3. Procédé de génération de signaux modulés à porteuses multiples selon la revendication 1, dans lequel la fonction de correction suit une fonction mathématique à l'intérieur d'un secteur.

4. Procédé de génération de signaux modulés à porteuses multiples selon l'une des revendications 1 à 3, dans lequel le signal corrigé par soustraction de la fonction de correction des valeurs d'acquisition est amplifié de telle manière que le niveau de signal maximal corresponde à un niveau maximal prescrit.

5. Procédé de transmission de signaux modulés à porteuses multiples pour canaux optiques à niveau de signal moyen réduit, comprenant les étapes suivantes :
- génération de signaux modulés à porteuses multiples pour canaux optiques à niveau de signal moyen réduit selon l'une des revendications précédentes ;
- émission du signal corrigé dans un guide d'ondes lumineuses par un émetteur optique ;
- réception du signal optique à partir du guide d'ondes lumineuses par un récepteur optique ;
- reconstruction du symbole de données d'origine par addition et/ou division par la fonction de correction pour obtenir un signal de sortie du récepteur optique.

6. Procédé de transmission selon la revendication 5, dans lequel la fonction de correction est transmise sur un canal séparé.

7. Procédé de transmission selon la revendication 5, dans lequel la fonction de correction est transmise dans une plage de fréquences propre.

8. Procédé de transmission selon la revendication 5, dans lequel la fonction de correction est transmise dans un signal multiplexé par code superposé.

9. Procédé de transmission selon la revendication 5, dans lequel la fonction de correction est transmise à l'intérieur du flux de données du signal modulé à porteuses multiples.

10. Procédé de transmission selon la revendication 5, dans lequel la fonction de correction est transmise dans un signal en multiplexage temporel propre.

11. Dispositif (1) de génération de signaux modulés à porteuses multiples pour des canaux optiques à niveau de signal moyen réduit, comprenant les composants suivants pour la génération de signaux modulés à porteuses multiples pour des canaux optiques à niveau de signal moyen réduit selon l'une des revendications 1 à 4 :
- un détecteur de valeurs de crête (4) pour déterminer le niveau minimal d'un symbole de données (2) acquis ;
- un générateur de fonction de correction (5) pour la génération d'une fonction de correction à partir des valeurs (8) déterminées par le détecteur de valeurs de crête ;
- un élément de temporisation (9) pour la génération d'un symbole de données temporisé ;
- un additionneur (7) pour la génération d'un signal corrigé par soustraction de la fonction de correction du symbole de données temporisé.

12. Dispositif pour l'analyse de signaux modulés à porteuses multiples selon l'une des revendications 1 à 4, comprenant :
- un additionneur pour l'addition de la fonction de correction au signal corrigé.

13. Système de transmission optique comprenant un dispositif (1) de génération de signaux modulés à porteuses multiples pour des canaux optiques à niveau de signal moyen réduit selon la revendication 11 destinés à être transmis à un émetteur optique et un dispositif pour l'analyse de signaux modulés à porteuses multiples pour des canaux optiques à puissance maximale réduite selon la revendication 12 à partir d'un récepteur optique.
